# EUROPEAN PATENT APPLICATION

(11) **EP 4 350 881 A1**
(43) Date of publication of application: **10.04.2024**
(21) Application number: 23790212.7
(22) Date of filing: 01.08.2023
(51) Int. Cl.: H01Q 1/24, H04M 1/02

(54) **ANTENNA STRUCTURE AND ELECTRONIC DEVICE COMPRISING ANTENNA STRUCTURE**

(30) Priority: 08.08.2022 KR 20220098747; 27.09.2022 KR 20220122166
(71) Applicant: Samsung Electronics Co., Ltd., Suwon-si, Gyeonggi-do 16677 (KR)
(72) Inventor: KIM, Jongmin, Suwon-si, Gyeonggi-do 16677 (KR); JUNG, Jeeyoung, Suwon-si, Gyeonggi-do 16677 (KR); CHO, Kyonghwan, Suwon-si, Gyeonggi-do 16677 (KR); HONG, Sangho, Suwon-si, Gyeonggi-do 16677 (KR)
(74) Representative: Gulde & Partner
(86) International application number: PCT/KR2023/011204
(87) International publication number: WO 2024/034964

(57) **Abstract**

An electronic device according to an embodiment of the disclosure may include a display module, a housing including a front surface on which the display module is disposed, a rear surface opposite to the front surface, and a lateral surface surrounding a space between the front surface and the rear surface, a waterproof structure disposed between the housing and the display module and including a first waterproof member disposed along one lateral surface of the housing, a second waterproof member disposed along the remaining lateral surface of the housing, and a third waterproof member configured to connect the first waterproof member and the second waterproof member, a conduit portion which is disposed to extend from the front surface of the housing to the rear surface of the housing so as to be inclined with respect to a direction perpendicular to the display module, and into which the third waterproof member is introduced, and a frame which is made of a conductive material and disposed to surround the lateral surface of the housing, and includes a protrusion portion extending toward the conduit portion.

## Description

### [Technical Field]

An embodiment of the disclosure relates to an antenna structure and an electronic device including the antenna structure. An embodiment relating to a frame which is made of a conductive material and transmits or receives a communication signal on a lateral surface of a housing may be included.

### [Background Art]

An electronic device may require a sealed waterproof and/or dustproof structure to prevent damage to electronic components disposed in an inner space due to moisture and/or foreign substances introduced from the outside.

The electronic device may transmit or receive a communication signal through a frame made of a metal material and positioned on a lateral surface of the electronic device.

### [Disclosure of Invention]

### [Technical Problem]

A waterproof and/or dustproof structure may require a closed loop to block moisture and/or foreign substances from being introduced into an electronic device. The closed loop may be configured by coupling multiple waterproof members. A housing of the electronic device may have a conduit which couples the multiple waterproof members and into which a material is introduced. The conduit may be positioned in a black matrix (BM) area of a display module where visual information is not displayed so as not to be visible in a user's field of view.

The BM area of the display module may be reduced to implement a visually wide screen. Accordingly, the conduit disposed in the housing may be disposed on a lateral surface of the housing and approach a frame functioning as an antenna. In this case, the thickness of the frame in an area adjacent to the conduit may be reduced. The thickness of the remaining area other than the area adjacent to the conduit may be increased so as to secure a certain level of rigidity of the frame. Accordingly, an area where the frame made of a conductive material and the display module overlap each other may be increased, and thus a coupling phenomenon may occur between the frame and the display module. Therefore, the antenna performance of the electronic device may be reduced.

An embodiment disclosed herein proposes a frame structure for improving the antenna performance.

### [Solution to Problem]

An electronic device according to an embodiment of the disclosure may include a display module, a housing including a front surface on which the display module is disposed, a rear surface opposite to the front surface, and a lateral surface surrounding a space between the front surface and the rear surface, a waterproof structure disposed between the housing and the display module and including a first waterproof member disposed along one lateral surface of the housing, a second waterproof member disposed along the remaining lateral surface of the housing, and a third waterproof member configured to connect the first waterproof member and the second waterproof member, a conduit portion which is disposed to extend from the front surface of the housing to the rear surface of the housing so as to be inclined with respect to a direction perpendicular to the display module, and into which the third waterproof member is introduced (i.e. the third waterproof member is disposed inside the conduit portion), and a frame which is made of a conductive material and disposed to surround the lateral surface of the housing, and includes a protrusion portion extending toward the conduit portion.

An antenna structure disposed to surround a lateral surface of a housing of an electronic device according to an embodiment of the disclosure may include a communication module, a waterproof structure which is disposed between the housing and a display module disposed on a front surface of the housing, and includes a first waterproof member disposed along one lateral surface of the housing, a second waterproof member disposed along the remaining lateral surface of the housing, and a third waterproof member configured to connect the first waterproof member and the second waterproof member, a conduit portion which is disposed to extend from the front surface of the housing to a rear surface of the housing so as to be inclined with respect to a direction perpendicular to the display module, and into which the third waterproof member is introduced, and a frame which is made of a conductive material, disposed to surround the lateral surface of the housing, and electrically connected to the communication module, and includes a protrusion portion extending toward the conduit portion.

### [Advantageous Effects of Invention]

According to an embodiment of the disclosure, an antenna deterioration phenomenon due to coupling between a frame and a display module may be reduced by removing an area of the frame, which overlaps the display module. In addition, the frame may extend toward the inside of an electronic device from an area located relatively far from the display module up to an area which does not overlap the display module. Accordingly, the rigidity of the frame may be improved.

### [Brief Description of Drawings]

In relation to the description of drawings, the same or similar reference numerals may be used for the same or similar components.
FIG. 1 is a block diagram of an electronic device in a network environment according to an embodiment of the disclosure;
FIG. 2A is a perspective view of a front surface of an electronic device according to an embodiment of the disclosure;
FIG. 2B is a perspective view of a rear surface of the electronic device of FIG. 2A according to an embodiment of the disclosure;
FIG. 3 is an exploded perspective view of the electronic device of FIG. 2A according to an embodiment of the disclosure;
FIG. 4 is an exploded perspective view of a display module according to various embodiments disclosed herein;
FIG. 5A illustrates a process of assembling a waterproof member according to an embodiment of the disclosure;
FIG. 5B is a rear perspective view of a display module according to an embodiment of the disclosure;
FIG. 6 illustrates a positional relationship between a frame and a conduit portion according to an embodiment;
FIG. 7A illustrates a positional relationship between a frame and a conduit portion in an embodiment of the disclosure, which is different from FIG. 6 A;
FIG. 7B is a cross-sectional view taken along line A-A of FIG. 7A according to an embodiment of the disclosure, and illustrates a state in which a frame configures a lateral external appearance of an electronic device;
FIG. 7C is a cross-sectional view taken along line A-A of FIG. 7A according to an embodiment of the disclosure, and illustrates a state in which a frame is disposed inside a lateral member;
FIG. 8A illustrates the thickness of the frame of FIG. 6 according to an embodiment of the disclosure;
FIG. 8B illustrates the thickness of the frame of FIG. 7A according to an embodiment of the disclosure; and
FIGS. 9A to 9C illustrate a change in antenna performance according to an embodiment of the disclosure.

### [Mode for the Invention]

It should be appreciated that various embodiments of the present disclosure and the terms used therein are not intended to limit the technological features set forth herein to particular embodiments and include various changes, equivalents, or replacements for a corresponding embodiment.

With regard to the description of the drawings, similar reference numerals may be used to refer to similar or related elements. It is to be understood that a singular form of a noun corresponding to an item may include one or more of the things, unless the relevant context clearly indicates otherwise.

As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1 st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

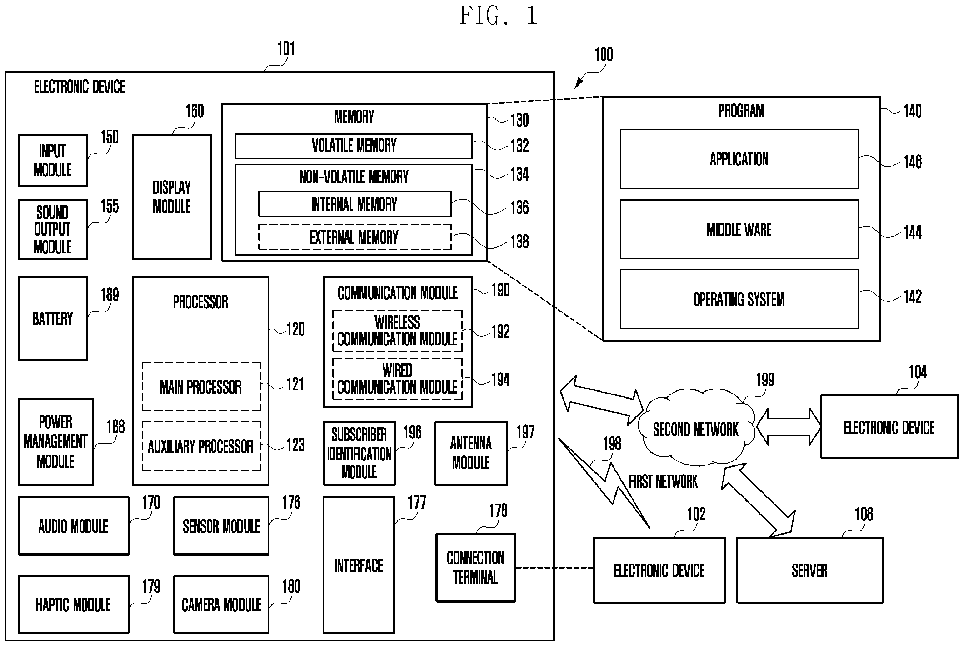

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adj acent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

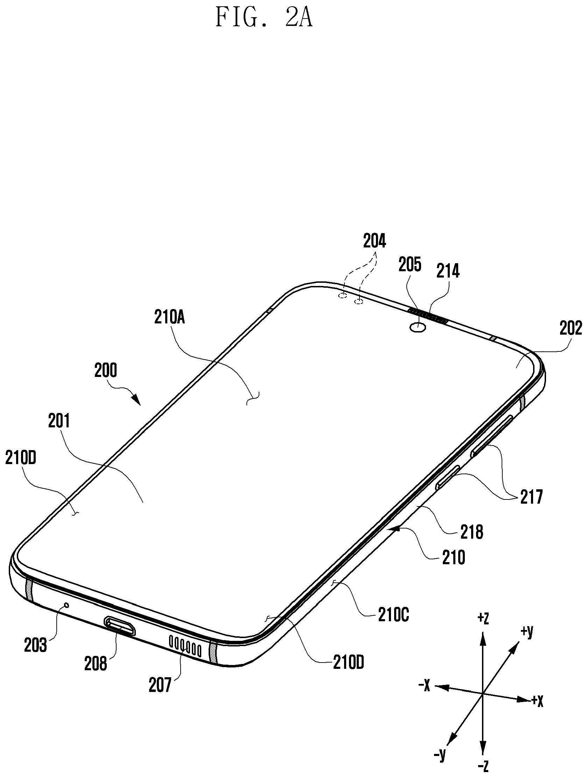

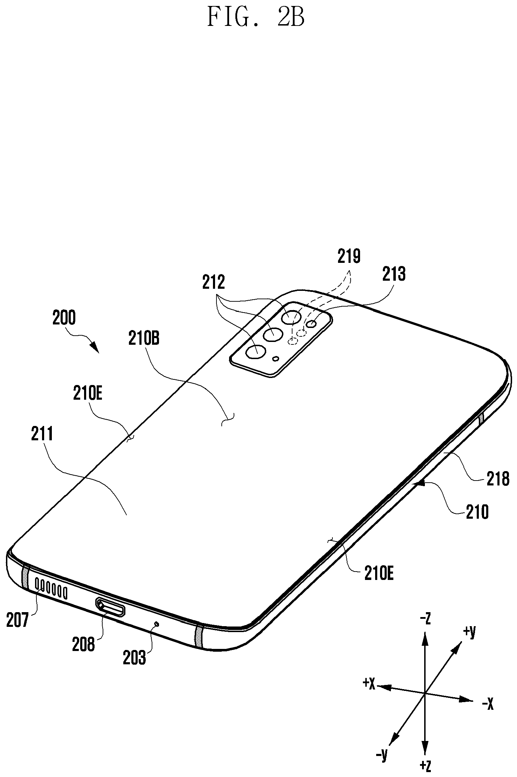

FIG. 2A is a front perspective view of an electronic device according to various embodiments of the disclosure. FIG. 2B is a rear perspective view of the electronic device of FIG. 2A according to various embodiments of the disclosure.

The electronic device 200 to be described below may include at least one of the components of the electronic device 101 described above with reference to FIG. 1.

With reference to FIG. 2A and FIG. 2B, the electronic device 200 according to an embodiment may include a housing 210 that includes a first surface (or front surface) 210A, a second surface (or rear surface) 210B, and a side surface 210C surrounding a space between the first surface 210A and the second surface 210B. In another embodiment (not shown), the housing 210 may refer to a structure forming a part of the first surface 210A, the second surface 210B, and the side surface 210C in FIG. 2A. According to an embodiment, the first surface 210A may be formed by a front plate 202 (e.g., glass plate or polymer plate including various coating layers) whose at least a portion is substantially transparent. The second surface 210B may be formed by a rear plate 211 that is substantially opaque. The rear plate 211 may be formed by, for example, coated or tinted glass, ceramic, polymer, metal (e.g., aluminum, stainless steel (STS), or magnesium), or a combination of at least two thereof. The side surface 210C may be formed by a side bezel structure (or "side member") 218 coupled to the front plate 202 and the rear plate 211 and including a metal and/or a polymer. In a certain embodiment, the rear plate 211 and side bezel structure 218 may be integrally formed and include the same material (e.g., metal material such as aluminum).

In the illustrated embodiment, the front plate 202 may include a first region 210D that is curved and seamlessly extended from the first surface 210A toward the rear plate at opposite ends of the longer edge of the front plate 202. In the illustrated embodiment (see FIG. 2B), the rear plate 211 may include a second region 210E that is curved and seamlessly extended from the second surface 210B toward the front plate 202 respectively at opposite ends of the longer edge. In a certain embodiment, the front plate 202 or the rear plate 211 may include only one of the first region 210D and the second region 210E. In a certain embodiment, the front plate 202 may not include the first region and the second region, but may include only a flat surface disposed parallel to the second surface 210B. In the above embodiments, when the electronic device is viewed from the side thereof, the side bezel structure 218 may have a first thickness (or width) on a side where the first region 210D or the second region 210E is not included, and may have a second thickness thinner than the first thickness on a side where the first region 210D or the second region 210E is included.

According to an embodiment, the electronic device 200 may include at least one or more of display 201, input device 203, sound output devices 207 and 214, sensor modules 204 and 219, camera modules 205 and 212, key input device 217, indicator (not shown), or connector 208. In a certain embodiment, at least one of the elements (e.g., key input device 217 or indicator) may be omitted from the electronic device 200, or another element may be added to the electronic device 200.

The display 201 may be exposed, for example, through a significant portion of the front plate 202. In a certain embodiment, at least a portion of the display 201 may be exposed through the front plate 202 forming the first surface 210A and the first region 210D of the side surface 210C. The display 201 may be coupled to or disposed adjacent to a touch sensing circuit, a pressure sensor capable of measuring the intensity (pressure) of a touch, and/or a digitizer that detects a magnetic field type stylus pen. In a certain embodiment, at least some of the sensor modules 204 and 219, and/or at least some of the key input devices 217 may be disposed on the first region 210D and/or the second region 210E.

The input device 203 may include a microphone 203. In a certain embodiment, the input device 203 may include a plurality of microphones 203 arranged to detect the direction of a sound. The sound output devices 207 and 214 may include speakers 207 and 214. The speakers 207 and 214 may include an external speaker 207 and a call receiver 214. In a certain embodiment, the microphone 203, the speakers 207 and 214, and the connector 208 may be at least partially disposed in the internal space of the electronic device 200, and may be exposed to the external environment through at least one hole formed in the housing 210. In a certain embodiment, the hole formed in the housing 210 may be commonly used for the microphone 203 and the speakers 207 and 214. In a certain embodiment, the sound output devices 207 and 214 may include a speaker (e.g., piezo speaker) that operates in isolation from the hole formed in the housing 210.

The sensor modules 204 and 219 may generate an electrical signal or a data value corresponding to an internal operating state of the electronic device 200 or an external environmental state. The sensor modules 204 and 219 may include, for example, a first sensor module 204 (e.g., proximity sensor) and/or a second sensor module (not shown) (e.g., fingerprint sensor) disposed on the first surface 210A of the housing 210, and/or a third sensor module 219 (e.g., HRM sensor) disposed on the second surface 210B of the housing 210. The fingerprint sensor may be disposed on the first surface 210A (e.g., home key button) of the housing 210, on a portion of the second surface 210B, and/or under the display 201. The electronic device 200 may further include a sensor module which is not shown, for example, at least one of a gesture sensor, a gyro sensor, a barometric pressure sensor, a magnetic sensor, an acceleration sensor, a grip sensor, a color sensor, an infrared (IR) sensor, a biometric sensor, a temperature sensor, a humidity sensor, a proximity sensor, or an illuminance sensor.

The camera modules 205 and 212 may include a first camera module 205 disposed on the first surface 210A of the electronic device 200, a second camera module 212 disposed on the second surface 210B, and/or a flash 213. The camera modules 205 and 212 may include one or plural lenses, an image sensor, and/or an image signal processor. The flash 213 may include, for example, a light emitting diode or a xenon lamp. In a certain embodiment, two or more lenses (wide-angle lens, ultra-wide-angle lens, or telephoto lens) and image sensors may be arranged in one surface of the electronic device 200.

The key input devices 217 may be arranged in the side surface 210C of the housing 210. In another embodiment, the electronic device 200 may not include some or all of the above-mentioned key input devices 217, and a key input device 217 not included may be implemented on the display 201 in a different form such as a soft key. In another embodiment, the key input devices 217 may be implemented using a pressure sensor included in the display 201.

The indicator may be disposed on, for example, the first surface 210A of the housing 210. The indicator may provide, for example, state information of the electronic device 200 in a light form (e.g., light emitting element). In another embodiment, the light emitting element may provide a light source interacting with, for example, the operation of the camera module 205. The indicator may include, for example, an LED, an IR LED, and/or a xenon lamp.

The connector holes 208 may include a first connector hole 208 capable of accepting a connector (e.g., universal serial bus (USB) connector) for transmitting and receiving power and/or data to and from an external electronic device, and/or a second connector hole (e.g., earphone jack) (not shown) capable of accepting a connector for transmitting and receiving an audio signal to and from an external electronic device.

Some of the camera modules 205 and 212, some of the sensor modules 204 and 219, or the indicator may be disposed to be exposed through the display 201. For example, the camera module 205, the sensor module 204, or the indicator may be arranged in the internal space of the electronic device 200 so as to be in contact with the external environment through an opening of the display 201 perforated up to the front plate 202 or a transmissive region. According to an embodiment, the region in which the display 201 and the camera module 205 face each other may be formed as a transmissive region having a preset transmittance as a part of the content display area. According to an embodiment, the transmissive region may be formed to have a transmittance in a range of about 5 percent to about 20 percent. This transmissive region may include a region overlapping an effective area (e.g., angle-of-view area) of the camera module 205 through which light passes for image generation with an image formed by an image sensor. For example, the transmissive region of the display 201 may include a region having a lower pixel density than surrounding regions. For example, the transmissive region may replace the opening. For example, the camera module 205 may include an under display camera (UDC). In another embodiment, a certain sensor module 204 may be disposed in the internal space of the electronic device so as to perform its function without being visually exposed through the front plate 202. For example, in this case, the region of the display 201 facing the sensor module may not need a perforated opening.

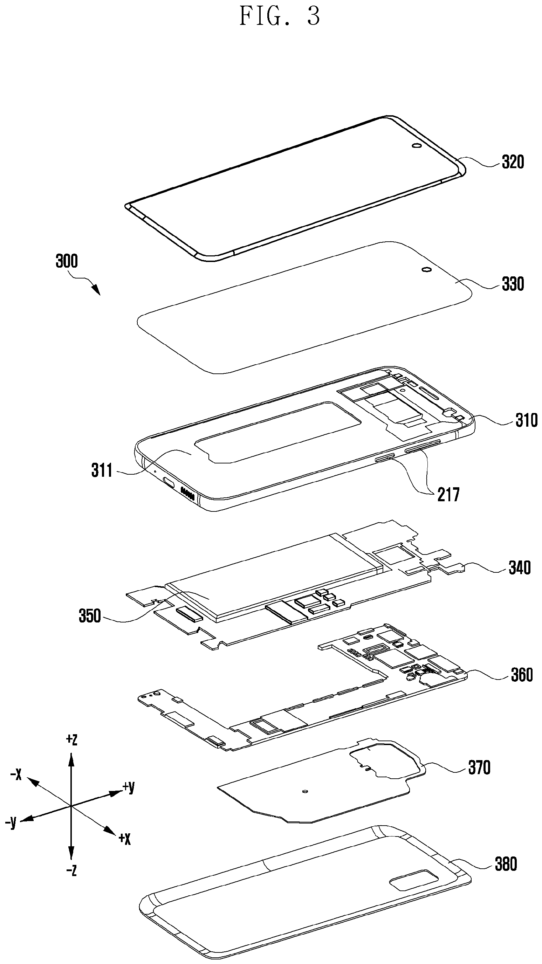

According to an embodiment, the electronic device 200 has a bar-type or plate-type external appearance, but the disclosure is not limited thereto. For example, the illustrated electronic device 200 may be a part of a foldable electronic device, a slidable electronic device, a stretchable electronic device, and/or a rollable electronic device. The "foldable electronic device", the "slidable electronic device", the "stretchable electronic device", and/or the "rollable electronic device" may refer to an electronic device in which a display (e.g., the display 330 of FIG. 3) is bendable, and thus at least a part thereof may be folded or may be wound or rolled, or an area thereof may be at least partially expanded and/or may be received in a housing (e.g., the housing 210 of FIGS. 2A and 2B). The foldable electronic device, the slidable electronic device, the stretchable electronic device, and/or the rollable electronic device may use an expanded screen display area by unfolding a display or exposing a larger area of the display to the outside according to a user' need.

FIG. 3 is an exploded perspective view of the electronic device 200 of FIG. 2A according to various embodiments of the disclosure.

The electronic device 300 of FIG. 3 may be at least partially similar to the electronic device 200 of FIGS. 2A and 2B, or may include other embodiments of an electronic device.

With reference to FIG. 3, the electronic device 300 (e.g., electronic device 200 in FIG. 2A or 2B) may include a side member 310 (e.g., side bezel structure), a first support member 311 (e.g., bracket or support structure), a front plate 320 (e.g., front cover), a display 330 (e.g., display 201 in FIG. 2A), a board 340 (e.g., printed circuit board (PCB), flexible PCB (FPCB), or rigid-flexible PCB (RFPCB)), a battery 350, a second support member 360 (e.g., rear case), an antenna 370, and a rear plate 380 (e.g., rear cover). In a certain embodiment, at least one of the components (e.g., first support member 311 or second support member 360) may be omitted from the electronic device 300 or other components may be additionally included therein. At least one of the components of the electronic device 300 may be the same as or similar to at least one of the components of the electronic device 200 of FIG. 2A or 2B, and repeated descriptions will be omitted below.

The first support member 311 may be disposed inside the electronic device 300 and may be connected to the side member 310 or may be integrally formed with the side member 310. The first support member 311 may be made of, for example, a metal material and/or a non-metal (e.g., polymer) material. The first support member 311 may have one surface coupled to the display 330 and the other surface coupled to the board 340. A processor, a memory, and/or an interface may be mounted on the board 340. The processor may include, for example, one or more of a central processing unit, an application processor, a graphics processing unit, an image signal processor, a sensor hub processor, and a communication processor.

The memory may include, for example, a volatile memory or a non-volatile memory.

The interface may include, for example, a high definition multimedia interface (HDMI), a universal serial bus (USB) interface, an SD card interface, and/or an audio interface. The interface may, for example, electrically or physically connect the electronic device 300 to an external electronic device, and may include a USB connector, an SD card/MMC connector, or an audio connector.

The battery 350 is a device for supplying power to at least one component of the electronic device 300, and may include, for example, a non-rechargeable primary cell, a rechargeable secondary cell, or a fuel cell. At least a portion of the battery 350 may be disposed substantially coplanar with the board 340, for example. The battery 350 may be integrally disposed inside the electronic device 300. In another embodiment, the battery 350 may be disposed attachably and detachably with the electronic device 300.

The antenna 370 may be disposed between the rear plate 380 and the battery 350. The antenna 370 may include, for example, a near field communication (NFC) antenna, a wireless charging antenna, and/or a magnetic secure transmission (MST) antenna. The antenna 370 may, for example, perform short-range communication with an external device or wirelessly transmit and receive power required for charging. In another embodiment, an antenna structure may be formed by a part of the side bezel structure 310 and/or the first support member 311 or a combination thereof.

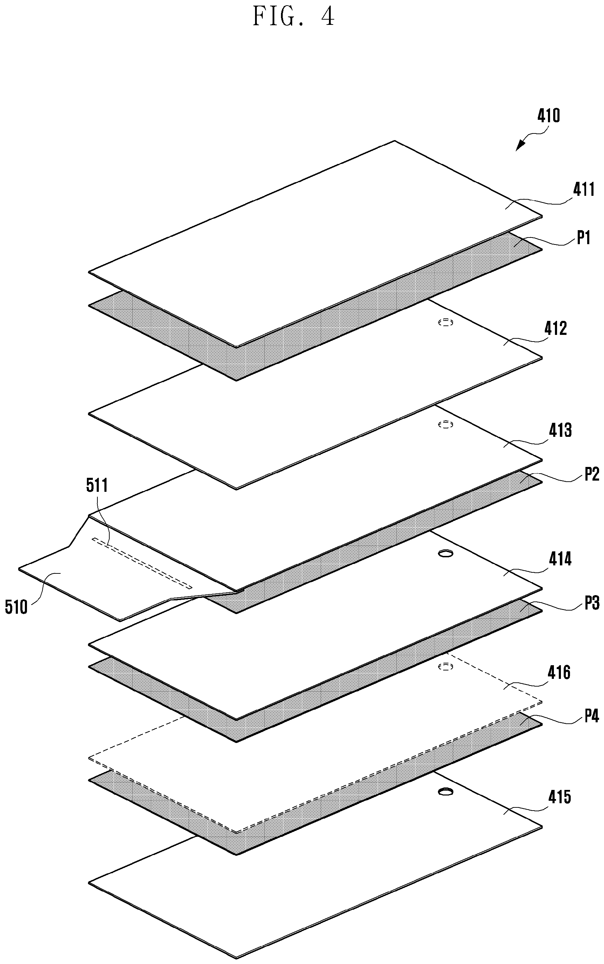

FIG. 4 is an exploded perspective view of a display module according to various embodiments disclosed herein.

In the following description, a display module 410 may be an example of the display module 160 described in FIG. 1, the display 201 of FIG. 2A, and/or the display 330 of FIG. 3. The display module 410 may refer to a device for visually displaying information. The display module 410 may be understood as a set of components for visually displaying information. The components of the display module 410 shown in FIG. 4 are merely one example of the components included in the display module 410, and the display module 410 may be configured by omitting some of the components shown in FIG. 4, and the display module 210 may be configured by adding components other than the components shown in FIG. 2.

The display module 410 may include a flat type display panel 413 employing an on cell touch active matrix organic light-emitting diode (AMOLED) (OCTA). In addition, the display module 410 may include an unbreakable (UB) type OLED display (e.g., a curved display) panel 413. In addition, a light-emitting element configuring the display panel 413 may be implemented as an inorganic light-emitting element manufactured using an inorganic material, different from an organic light-emitting diode (OLED) manufactured using an organic material. According to various embodiments, the light-emitting element may be a micro light-emitting diode (LED) (u-LED). The micro LED may refer to a subminiature inorganic light-emitting element having a size of 100 micrometers (µm) or less and emitting light by itself without a backlight or a color filter.

Referring to FIG. 4, the display module 410 may include a window layer 411, a polarizing layer 412 (polarizer (POL)) (e.g., a polarizing film) sequentially disposed on a rear surface of the window layer 411, a display panel 413, a polymer layer 414, and a metal sheet layer 415. In some embodiments, the display panel 413 may include a digitizer panel 416 disposed between the polymer layer 414 and the metal sheet layer 415 or on a rear surface of the metal sheet layer 415.

According to various embodiments, the window layer 411 may include a glass layer. According to an embodiment, the window layer 411 may include ultra-thin glass (UTG). In some embodiments, the window layer 411 may include a polymer. In this case, the window layer 411 may include polyethylene terephthalate (PET) or polyimide (PI). In some embodiments, the window layer 211 may be disposed in multiple layers to include a glass layer and a polymer.

According to an embodiment, the window layer 411, the polarizing layer 412, the display panel 413, the polymer layer 414, and the metal sheet layer 415 may be attached to each other through sticking agents P1, P2, P3, and P4 (or adhesives). For example, the sticking agents P1, P2, P3, and P4 may include at least one of an optical clear adhesive (OCA), a pressure sensitive adhesive (PSA), a heat-reactive adhesive, a general adhesive, or a double-sided tape.

According to various embodiments, the display panel 413 may include multiple pixels and a wiring structure (e.g., an electrode pattern). According to an embodiment, the polarizing layer 412 may selectively pass light generated from a light source of the display panel 413 and vibrating in a predetermined direction. According to an embodiment, the display panel 413 and the polarizing layer 412 may be integrally configured. According to an embodiment, the display panel 413 may include a touch panel (not shown). Components included in the display panel 413 may be disposed on a substrate of the display panel 413. The substrate of the display panel 413 may be made of a rigid material such as glass. In some embodiments, the substrate of the display panel 413 may be made of a flexible material. For example, the substrate may be made of a flexible material such as polyimide (PI), polyethylene terephthalate (PET), or ultra-thin glass (UTG).

According to various embodiments, the polymer layer 414 may be disposed under the display panel 413 to provide a dark background for securing visibility of the display panel 413, and may be made of a buffer material (e.g., a cushion) for a buffering action. For example, the polymer layer 414 may include an opaque metal layer (e.g., a black layer having an uneven pattern) for removing air bubbles which may be generated between the display panel 413 and lower attachments thereof and blocking light generated in the display panel 413 or light incident light from the outside, and/or a buffer layer (e.g., a sponge layer) disposed to mitigate impact. In some embodiments, for waterproofing of the flexible display 410, the polymer layer 414 may be removed or disposed under the metal sheet layer 415.

According to an embodiment, the metal sheet layer 415 may include at least one of steel use stainless (SUS) (e.g., stainless steel (STS)), Cu, Al, or a metal CLAD (e.g., a stacked member in which SUS and Al are alternately disposed). In some embodiments, the metal sheet layer 415 may include other alloy materials. In some embodiments, the metal sheet layer 415 may help to reinforce the rigidity of the electronic device 300 and may be used to shield ambient noise and dissipate heat emitted from a surrounding heat emission component. Although FIG. 4 illustrates that the metal sheet layer 415 is formed to have the same area as the display panel 413, in some embodiments, the metal sheet layer 415 may be disposed on a part of the display panel 413. In some cases, the metal sheet layer 415 may be omitted.

According to various embodiments, the digitizer panel 416 may be disposed between the metal sheet layer 415 and the polymer layer 414. In some cases, the digitizer panel 416 may be disposed under the metal sheet layer 415. The digitizer panel 416 may be a detection member which receives an input from a pen input device (e.g., a stylus).

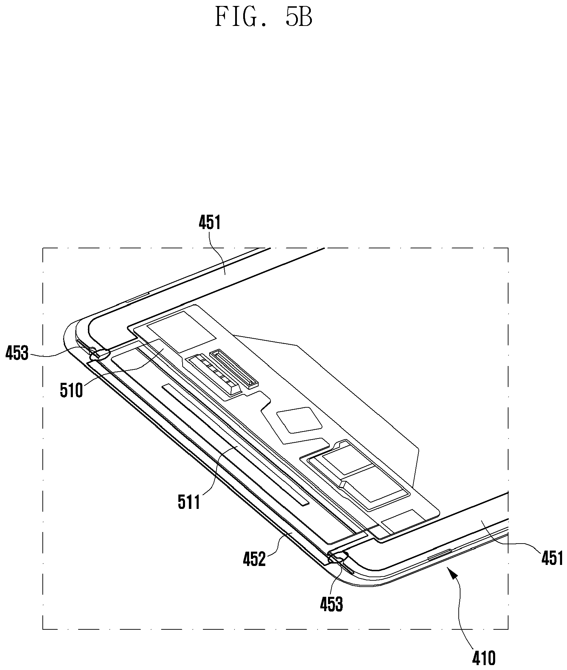

According to various embodiments, the display module 410 may include a bending portion 510 (e.g., the bending portion of FIG. 5B) disposed in a manner (e.g., bending) of being folded from the display panel 413 toward at least a partial area of a rear surface of the display module 410. According to an embodiment, the bending portion 510 may be electrically connected to the display panel 413. The bending portion 510 may include a display driver IC (DDI) 511 (e.g., a DDI 511 of FIG. 5B). In some embodiments, the bending portion 510 connected to the display panel 413 may include both the DDI 511 and a touch display driver IC (TDDI) (not shown).

In an embodiment, the bending portion 510 may be configured integrally with the substrate of the display panel 413. The bending portion 510 may be a part of the substrate on which the light-emitting element of the display panel 413 is disposed. The bending portion 510 may include a part extending from the substrate of the display panel 413 and at least partially deformed to extend to a rear surface of the display panel 413. In an embodiment, the display module 410 may include a chip on panel (COP) structure in which the DDI 511 is disposed in the bending portion 510 configured integrally with the substrate of the display panel 413.

In an embodiment, the bending portion 510 may be formed separately from the substrate of the display panel 413 and electrically connected to the display panel 413. In this case, the bending portion 510 may be a printed circuit board (e.g., a flexible printed circuit board (FPCB)) made of a flexible material. A part of the bending portion 510 connected to the display panel 413 may be deformed to extend to the rear surface of the display panel 413. In an embodiment, the display module 410 may include a chip on film (COF) structure in which the DDI 511 is disposed in the bending portion 510 electrically connected to the display panel 413.

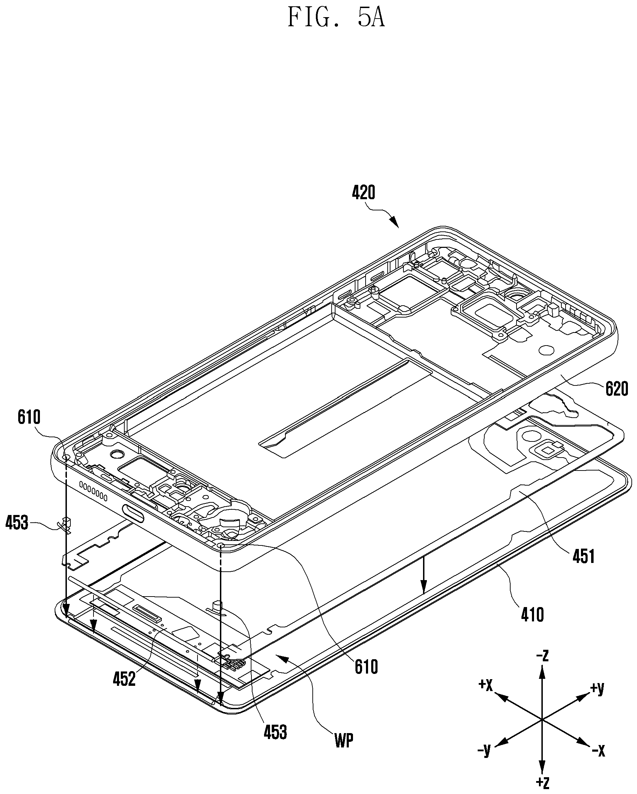

FIG. 5A illustrates a process of assembling a waterproof member according to an embodiment of the disclosure. FIG. 5B is a rear perspective view of a display module according to an embodiment of the disclosure.

According to an embodiment, the electronic device 300 (e.g., the electronic device 101 of FIG. 1 or the electronic device 200 of FIG. 2A or 2B) may include a waterproof structure WP therein for preventing moisture and/or foreign substances introduced from the outside of the electronic device 300 to damage electronic components disposed in the electronic device 300. In an embodiment, the waterproof structure WP may be configured through waterproof members 451, 452, and 453 disposed in a housing 420 (e.g., the housing 210 of FIGS. 2A and 2B). In an embodiment, the waterproof members 451, 452, and 453 may include at least one of tape, adhesive, waterproof dispensing, silicone, waterproof rubber, and urethane.

According to an embodiment, the waterproof structure WP may configure a closed loop including a waterproof space. The electronic components of the electronic device 300 may be positioned in a waterproof space formed by the waterproof members 451, 452, and 453. Therefore, the electronic components disposed inside the electronic device 300 may be protected from moisture and/or foreign substances introduced from the outside of the electronic device 300.

According to an embodiment, as shown in FIG. 5A, the waterproof structure WP may be configured between the housing 420 and the display module 410 (e.g., the display module 160 of FIG. 1, the display 201 of FIG. 2A, or the display 330 of FIG. 3). In an embodiment, the waterproof structure WP may include one waterproof member configuring a closed loop or the multiple waterproof members 451, 452, and 453 configuring a closed loop via coupling. In an embodiment, referring to FIG. 5A, the waterproof structure WP may be configured through a first waterproof member 451, a second waterproof member 452, and a third waterproof member 453 which are disposed between the housing 420 and the display module 410. As described above, the waterproof structure WP may configure a closed loop including a waterproof space through the multiple waterproof members 451, 452, and 453. In an embodiment, the first waterproof member 451 may be disposed to surround at least a part of a lateral surface (e.g., the lateral surface 210C of the housing 210 of FIG. 2A) of the housing 420. The second waterproof member 452 may be disposed on the remaining lateral surface on which the first waterproof member 451 is not disposed. In an embodiment, the third waterproof member 453 may connect the first waterproof member 451 and the second waterproof member 452 to configure a closed loop having the waterproof structure WP. In an embodiment, the third waterproof member 453 may be disposed between the first waterproof member 451 and the second waterproof member 452. The third waterproof member 453 may be disposed on the surface where the first waterproof member 451 and the second waterproof member 452 face each other, so as to couple the first waterproof member 451 and the second waterproof member 452. Accordingly, the first waterproof member 451 and the second waterproof member 452 may configure a closed loop including a waterproof space through the third waterproof member 453.

According to an embodiment, the multiple waterproof members 451, 452, and 453 may be individually disposed in the housing 420 in consideration of the arrangement of the electronic components of the electronic device 300. In an embodiment, referring to FIG. 5B, as described above, the display module 410 may include the bending portion 510 disposed in a manner of being folded from the display panel 413 toward at least a partial area of the rear surface of the display module 410. According to an embodiment, the bending portion 510 may extend from the display panel 413 and include multiple wires. In an embodiment, the bending portion 510 may be a flexible printed circuit board (FPCB). In an embodiment, the multiple wires included in the bending portion 510 may be a control circuit which controls the display module 410. The control circuit may include the display driver IC (DDI) 511 or a touch display driver IC (TDDI).

In an embodiment, the display module 410 may be positioned on the lateral surface of the housing 420. In an embodiment, when the display module 410 is viewed in a vertical direction (e.g., the Z-axis direction with reference to FIG. 5A), the first waterproof member 451 may be disposed in the housing 420 to surround the lateral surface of the housing 420, on which the bending portion 510 is not disposed, so as not to overlap the bending portion 510 of the display module 410. In an embodiment, the second waterproof member 452 may be disposed so as not to overlap the bending portion 510 of the display module 410 and may be disposed on the remaining lateral surface of the housing 420, on which the first waterproof member 451 is not disposed. In an embodiment, the third waterproof member 453 may be disposed on the surface where the first waterproof member 451 and the second waterproof member 452 face each other, so as to couple the first waterproof member 451 and the second waterproof member 452. In addition, the third waterproof member 453 may connect the first waterproof member 451 and the second waterproof member 452 in various manners. Accordingly, the first waterproof member 451 and the second waterproof member 452 may configure a closed loop including a waterproof space through the third waterproof member 453. The electronic components disposed inside the electronic device 300 may be protected from external moisture or foreign substances of the electronic device 300 through a waterproof space formed by the multiple waterproof members 451, 452, and 453.

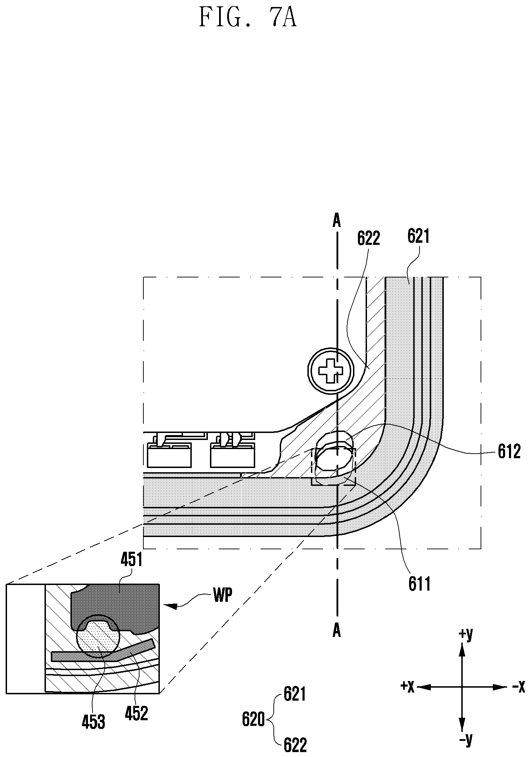

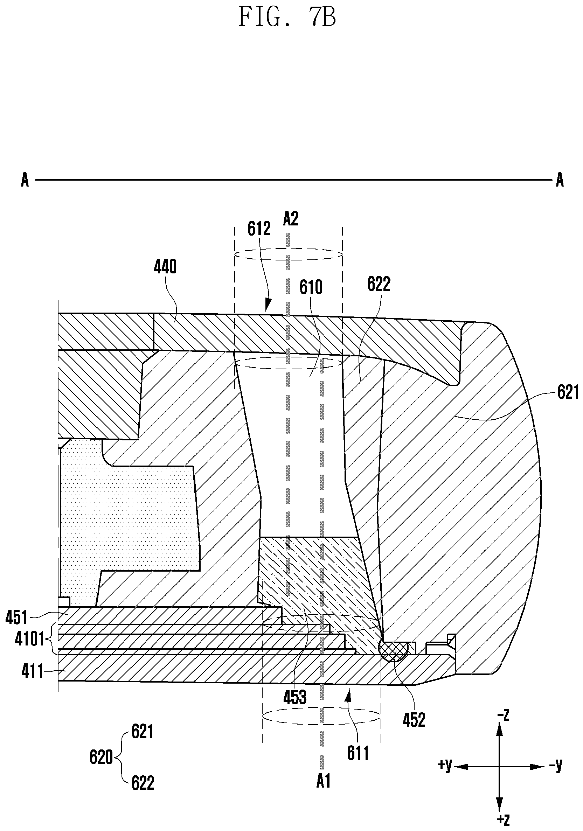

According to an embodiment, the third waterproof member 453 may include a semisolid or liquid material, and include cured in place gaskets (CIPGs) (e.g., a waterproof filling member) having a property of being solidified by natural or external conditions (e.g., heat, ultraviolet rays, moisture, or pressure). In an embodiment, referring to FIG. 5A, the housing 420 may include a conduit portion 610 into which the third waterproof member 453 is introduced. After introduction, the third waterproof member 453 is disposed inside the conduit portion 610. The conduit portion 610 may include a first hole 611 disposed on a front surface (e.g., the surface facing the +Z direction with reference to FIG. 5A) (e.g., the first surface 210A of the housing 210) of the housing 420 on which the display module 410 is disposed, and a second hole 612 disposed on a rear surface (e.g., the surface facing the -Z direction with reference to FIG. 5A) (e.g., the second surface 210B of the housing 210) of the housing. Referring to FIGS. 7A and 7B to be described later, the third waterproof member 453 may be introduced through the conduit portion 610 and fill a gap between the first waterproof member 451 and the second waterproof member 452. Accordingly, the multiple waterproof members 451, 452, and 453 may configure a closed loop.

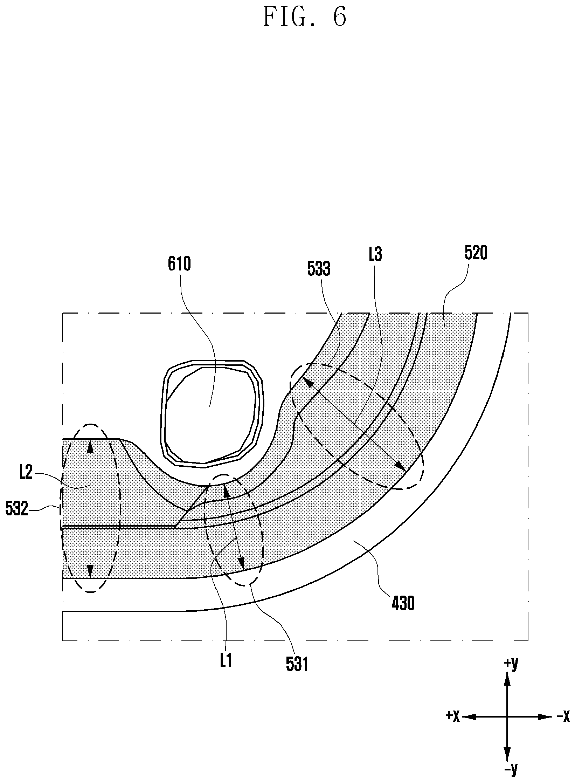

FIG. 6 illustrates a positional relationship between a frame and a conduit portion according to an embodiment.

Hereinafter, a structural relationship between the conduit portion 610 formed in the housing 420 (e.g., the housing 210 of FIGS. 2A and 2B) and the frame 520 disposed on a lateral surface (e.g., the lateral surface 210C of the housing 210 of FIG. 2A) of the housing 420 to transmit or receive a communication signal will be described. The frame 520 to be described below may have a structure different from that of a frame 620 according to an embodiment of the disclosure.

According to an embodiment, as shown in FIG. 5A, the electronic device 300 (e.g., the electronic device 101 of FIG. 1 or the electronic device 200 of FIG. 2A or 2B) may include the frame 520 (e.g., the lateral bezel structure 218 of FIG. 2A or the lateral member 310 of FIG. 3) (e.g., the frame 620 of FIGS. 7A to 7C). In an embodiment, the frame 520 may be disposed to surround the display module 410 (e.g., the display module 160 of FIG. 1, the display 201 of FIG. 2A, or the display 330 of FIG. 3) of the electronic device 300. In some embodiments, the frame 520 may be made of a conductive material such as a metal material. For example, the frame 520 may be made of a metal material including aluminum (Al). This is merely an example, and the frame 520 may be made of various metal materials.

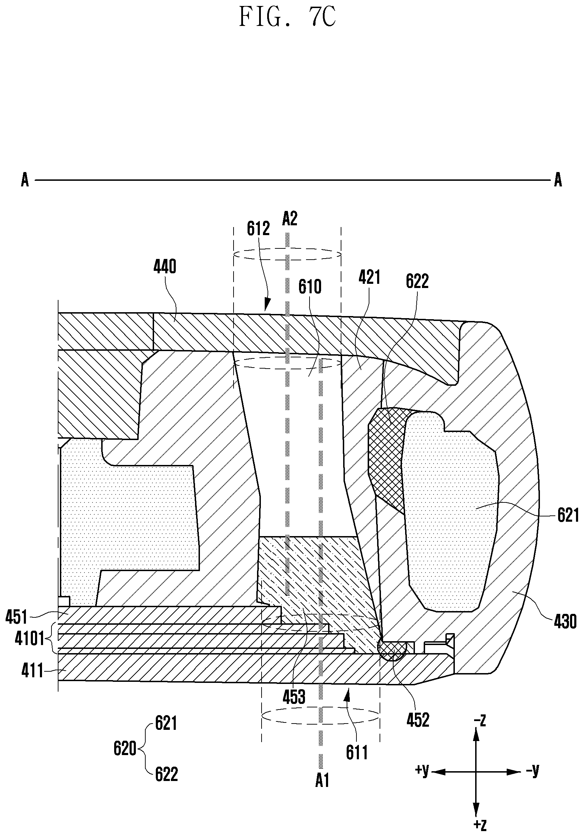

According to an embodiment, as shown in FIG. 7B to be described later, a frame (e.g., the frame 620 of FIG. 7B) may configure an external appearance of a lateral surface (e.g., the lateral surface 210C of FIG. 2A) of the electronic device 300. In some embodiments, as shown in FIG. 7C to be described later, a lateral member 430 (e.g., the lateral bezel structure 218 of FIG. 2A or the lateral member 310 of FIG. 3) made of a non-metallic material may be disposed on the lateral surface of the electronic device 300. In FIG. 7C to be described later, a frame (e.g., the frame 620 of FIG. 7C) may be disposed inside the lateral member 430.

According to an embodiment, the frame 520 (e.g., the frame 620 of FIGS. 7A, 7B, and 7C) may be made of a conductive material and used as an antenna of the electronic device 300. The frame 520 may be electrically connected to a communication module of the electronic device 300 to transmit or receive a communication signal (e.g., an RF signal) to or from an external device. In an embodiment, the frame 520 may be electrically connected to the communication module through an RF wire. The RF wire may be a component which transmits a radio frequency (RF) signal. The RF wire may transmit an RF signal processed by the communication module of the electronic device 300 to the frame 520 serving as an antenna, or transmit an RF signal received by the frame 520 to the communication module.

According to an embodiment, the frame 520 may be physically segmented by a segmentation portion (not shown). An insulation member made of a material having low conductivity or low permittivity may be disposed in the segmentation portion, so that the frame may be electrically segmented. In an embodiment, when the frame 520 is used as an antenna of the electronic device 300, an antenna resonance frequency may be determined according to a physical length of the frame 520. For example, as described above, the frame 520 may be segmented into multiple parts having different lengths. In this case, the segmented frames 520 may have different resonant frequencies, respectively. When the frames 520 having different resonant frequencies are used, communication (e.g., short-distance communication and long-distance communication) in various frequency bands may be possible.

Various electronic components which transmit an electrical signal or are driven by receiving an electrical signal may be disposed inside the electronic device 300. These components will be referred to as an "electrical object" below. The electrical object may be made of a conductive material or may include at least one conductive material. In an embodiment, the electrical object may be an electronic component configuring the display module 410. For example, an electrical component 4101 may be an electronic component such as the display panel 413 of the display module 410, the digitizer panel 416, and a signal wire of the display module 410. When the electrical object 4101 and the frame 520 are disposed adjacent to each other, a coupling phenomenon may occur between the frame 520 and the electrical object 4101 of the display module 410. As described above, each frame 520 may have a preconfigured resonant frequency. When a coupling phenomenon occurs between the frame 520 and the electrical object 4101 of the display module 410, a resonance frequency of the frame 520 may be changed. As a result, the transmission or reception efficiency of a communication signal through the frame 520 may be reduced. In addition, the display module 410 may include multiple electrical objects 4101 (e.g., the electric object 4101 of FIG. 7B (e.g., the display panel 413, the digitizer panel 416, the bending portion 510, and/or the DDI 511)). In the frame 520, the transmission or reception efficiency of a communication signal may be reduced due to noise generated from the multiple electrical objects 4101 of the display module 410.

According to an embodiment, the display module 410 may include a display area where visual information is displayed and a black matrix (BM) area where visual information is not displayed. The conduit potion 610 may be positioned in the BM area of the display module 410 so as not to be visible in a user's field of view. In an embodiment, the conduit portion 610 may be formed at a corner of the housing 420 and may be positioned in the BM area of the display module 410. The display area of the display module 410 may be expanded to implement a visually wide screen. On the other hand, the BM area of the display module 410 may be reduced. In this case, the conduit portion 610 may be formed adjacent to the frame 520 positioned on the lateral surface of the housing 420. Accordingly, a thickness L1 of a first area 531 of the frame 520 adjacent to the conduit portion 610 may be formed to be thin as the conduit portion 610 is formed adjacent to the frame 520. To compensate for the thinning of the thickness of the first area 531 of the frame 520, a thickness L2 of a second area 532 and a thickness L3 of a third area 533, the areas being peripheral areas of the first area 531 of the frame 520, may be formed to be thicker than the thickness L1 of the first area. In this case, an area where the second area 532 and the third area 533 of the frame 520 overlap the electrical object 4101 of the display module 410 may be increased. For example, when the display module 410 is viewed in a vertical direction (e.g., the Z-axis direction with reference to FIG. 5A), an area where the second area 532 and the third area 533 of the frame 520 overlap the electrical object 4101 of the display module 410 may be increased. Accordingly, a coupling phenomenon may occur between the electrical object 4101 of the display module 410 and the frame 520, and thus the transmission or reception efficiency of a communication signal through the frame 520 may be reduced. According to various embodiments of the disclosure, the frame 620 capable of securing the rigidity of the frame 520 and improving the transmission or reception efficiency of a communication signal through the frame 520 may be proposed. This will be described in detail below.

FIG. 7A illustrates a positional relationship between a frame and a conduit portion in an embodiment of the disclosure, which is different from FIG. 6 A. FIG. 7B is a cross-sectional view taken along line A-A of FIG. 7A according to an embodiment of the disclosure, and illustrates a state in which a frame configures a lateral external appearance of an electronic device. FIG. 7C is a cross-sectional view taken along line A-A of FIG. 7A according to an embodiment of the disclosure, and illustrates a state in which a frame is disposed inside a lateral member.

According to an embodiment, as shown in FIGS. 7A to 7C, the conduit portion 610 may be disposed to extend from a front surface (e.g., the front surface 210A of the housing 210 of FIG. 2A) of the housing 420 (e.g., the housing 210 of FIGS. 2A and 2B) to a rear surface (e.g., the rear surface 210B of the housing 210 of FIG. 2B) so as to be inclined with respect to a direction (e.g., the Z-axis direction with reference to FIG. 7B) perpendicular to the display module 410 (e.g., the display module 160 of FIG. 1, the display 201 of FIG. 2A, or the display 330 of FIG. 3). For example, the conduit portion 610 may be disposed to become gradually away from a lateral surface (e.g., the lateral surface 210C of the housing 210 of FIG. 2A) of the housing 420 along a direction from the front surface (e.g., the surface facing the +Z direction with reference to FIG. 7B) of the housing 420 to the rear surface (e.g., the surface facing the -Z direction with reference to FIG. 7B) of the housing. In this case, a second hole 612 may be spaced apart from a first hole 611 in a first direction (e.g., the +Y direction with reference to FIG. 7B). In addition, in relation to the first hole 611 and the second hole 612 of the conduit portion 610, as the conduit portion 610 is formed to be inclined, a central axis A1 of the first hole 611 and a central axis A2 of the second hole 612 may not match.

According to an embodiment, as described above, the conduit portion 610 may be disposed obliquely with respect to a direction perpendicular to the display module 410 so that the conduit portion becomes gradually away from one lateral surface of the housing 420 along a direction from the front surface of the housing 420 to the rear surface of the housing. For example, the conduit portion 610 may be disposed obliquely with respect to a direction perpendicular to the display module 410 so that the conduit portion becomes away from one lateral surface of the housing 420 facing the bending portion 510 of the display module 410. Accordingly, the additional area secured in the frame 620 or the lateral member 430 (e.g., the lateral bezel structure 218 of FIG. 2A or the lateral member 310 of FIG. 3) disposed on the lateral surface of the housing 420 may increase along a direction from the front surface of the housing 420 to the rear surface of the housing. For example, referring to FIG. 7B, the thickness (e.g., the length in the Y-axis direction with reference to FIG. 7B) of the frame 620 may increase along a traveling direction of the conduit portion 610. In addition, referring to FIG. 7C, the thickness (e.g., the length in the Y-axis direction with reference to FIG. 7C) of the lateral member 430 may increase along a traveling direction of the conduit portion 610.

According to an embodiment, as shown in FIG. 7B, the frame 620 may be disposed on the lateral surface of the housing 420 to configure an external appearance of a lateral surface 210c of the electronic device 300 (e.g., the electronic device 101 of FIG. 1 or the electronic device 200 of FIG. 2A or 2B). The frame 620 may include a body portion 621 disposed on the lateral surface of the housing 420 and a protrusion portion 622 extending from the body portion 621 toward the conduit portion 610. The protrusion portion 622 may be a part of the frame 620 secured by the increased thickness of the frame 620 along a traveling direction of the conduit portion 610. In an embodiment, the protrusion portion 622 may be a part protruding from the first area 531 of the frame 620 toward the conduit portion 610. The thickness of the frame 620 may increase toward the conduit portion 610 as the protrusion portion 622 is formed. Therefore, the rigidity of the frame 620 may be increased. For the convenience of description, the frame 620 has been described by dividing the frame into the body portion 621 and the protrusion portion 622, but the body portion 621 and the protrusion portion 622 may be integrally configured and may not be physically divided.

According to an embodiment, as shown in FIGS. 7B and 7C, the protrusion portion 622 may be positioned closer to the rear surface (e.g., the surface facing the -Z direction with reference to FIG. 7B) than the front surface (e.g., the surface facing the +Z direction with reference to FIG. 7B) of the housing 420. For example, the protrusion portion 622 may be positioned adjacent to a rear plate 440 (e.g., the rear plate 380 of FIG. 3) positioned on the rear surface of the housing 420. When the protrusion portion 622 is positioned adjacent to the rear surface of the housing 420 rather than when the protrusion portion is positioned adjacent to the front surface of the housing 420, the protrusion portion 622 of the frame 620 and the electrical object 4101 configuring the display module 410 may be spaced more apart from each other. The more the protrusion portion 622 and the electrical object 4101 configuring the display module 410 are spaced apart from each other, the more a coupling phenomenon occurring between the protrusion portion 622 and the electrical object 4101 configuring the display module 410 may be alleviated. Therefore, the protrusion portion 622 is positioned adjacent to the rear surface of the housing 420 so as to be spaced apart from the display module 410, so that the transmission or reception efficiency of a communication signal through the frame 620 may be improved.

However, in the above description, it has been described that the protrusion 622 is positioned adjacent to the rear surface of the housing 420, but this is merely an embodiment, and the position of the protrusion portion 622 may be variously changed. For example, the protrusion portion 622 may be positioned near the center of the front surface and the rear surface of the housing 420.

According to an embodiment, as shown in FIG. 7B, when the electrical object 4101 of the display module 410 is viewed in a vertical direction (e.g., the Z-axis direction with reference to FIG. 7B), a separation space may be located between the frame 620 and the electrical object 4101 of the display module 410. For example, the separation space may be a space formed by the frame 620 being spaced apart from the display module 410 so as not to overlap the electrical object 4101 of the display module 410 when the display module 410 is viewed in a vertical direction. In an embodiment, when the electrical object 4101 of the display module 410 is viewed in a vertical direction, the protrusion portion 622 of the frame 620 may extend toward the conduit portion 610 up to the farthest position before the protrusion portion overlaps the electrical object 4101 of the display module 410. In an embodiment, when the electrical object 4101 of the display module 410 is viewed in a vertical direction, the protrusion portion 622 may be disposed closer to the rear surface of the electronic device 300 than the front surface of the electronic device. Therefore, the protrusion portion 622 of the frame 620 is disposed closer to the rear surface of the electronic device 300 than the front surface of the electronic device and is spaced apart from the electrical object 4101, and thus a coupling phenomenon occurring between the electrical object 4101 and the frame 620 may be alleviated. Therefore, the transmission or reception efficiency of a communication signal through the frame 620 may be improved.

In some embodiments, when the display module 410 is in a vertical direction (e.g., the Z-axis direction with reference to FIG. 7B), the protrusion portion 622 may extend from the body portion 621 toward the conduit portion 610 up to a position where the protrusion portion does not overlap the electrical object 4101 of the display module 410. The frame 620 and the electrical object 4101 of the display module 410 do not overlap or partially overlap, so that a coupling phenomenon occurring between the frame 620 and the electrical object 4101 of the display module 410 may be alleviated. Therefore, the transmission or reception efficiency of a communication signal through the frame 620 may be improved. Also, the frame may extend toward the inside of an electronic device from an area located relatively far from the display module up to an area which does not overlap an active area of the display module.

In the described description above, when the display module 410 is viewed in a vertical direction, it has been described on the premise that the frame 620 does not overlap the electrical object 4101 of the display module 410. However, it may not mean that when the electrical object 4101 and the frame 620 partially overlap each other, the transmission or reception efficiency of a communication signal of the frame 620 is not improved. For example, when the display module 410 is viewed in a vertical direction, even when the protrusion portion 622 of the frame 620 partially overlaps the electrical object 4101 of the display module 410, the transmission or reception efficiency of a communication signal through the frame 620 may be partially improved.

According to an embodiment, as shown in FIG. 7C, the lateral member 430 may be disposed on the lateral surface of the housing 420. The lateral member 430 may be made of a non-metallic material to configure a lateral external appearance of the electronic device 300. The frame 620 capable of transmitting or receiving a communication signal may be disposed inside the lateral member 430.

According to an embodiment, as shown in FIG. 7C, the lateral member 430 may include an inner wall portion 421 protruding toward the conduit portion 610. At least a part of the protrusion portion 622 extending from the body portion 621 of the frame 620 disposed in the lateral member 430 may be disposed in the inner wall portion 421 of the lateral member 430. In some embodiments, at least a part of the protrusion portion 622 may extend through the inner wall portion 421 to be positioned in the conduit portion 610. The inner wall portion 421 may be an area of the lateral member 430, which is secured by the increased thickness (e.g., the length in the Y-axis direction with reference to FIG. 7C) of the lateral member 430 along a traveling direction of the conduit portion 610. The durability of the lateral member 430 may be improved since the inner wall portion 421 is formed. In addition, the durability of the lateral member 430 may be improved since the protrusion portion 622 of the frame 620 made of a metal material is disposed in the inner wall portion 421.

According to an embodiment, as shown in FIG. 7C, the inner wall portion 421 may be positioned closer to the rear surface of the housing 420 than the front surface of the housing. For example, the inner wall portion 421 may be positioned adjacent to the rear plate 440 disposed on the rear surface of the housing 420. In this case, the protrusion portion 622 positioned inside the inner wall portion 421 may be positioned closer to the rear surface of the housing 420 than the front surface of the housing. As described above, when the protrusion portion 622 is positioned adjacent to the rear surface of the housing 420 rather than when the protrusion portion is positioned adjacent to the front surface of the housing 420, the protrusion portion 622 of the frame 620 and the electrical object 4101 configuring the display module 410 may be spaced more apart from each other. The more the protrusion portion 622 and the electrical object 4101 configuring the display module 410 are spaced apart from each other, the more a coupling phenomenon occurring between the protrusion portion 622 and the electrical obj ect 4101 configuring the display module 410 may be alleviated. Therefore, the protrusion portion 622 is positioned adjacent to the rear surface of the housing 420 so as to be spaced apart from the electrical object 4101 of the display module 410, so that the transmission or reception efficiency of a communication signal through the frame 620 may be improved.

However, in the above description, it has been described that the inner wall portion 421 is positioned adjacent to the rear surface of the housing 420, but this is merely an embodiment, and the position of the inner wall portion 421 may be variously changed. For example, the inner wall portion 421 may be positioned near the center of the front surface and the rear surface of the housing 420.

According to an embodiment, as shown in FIG. 7C, when the electrical object 4101 of the display module 410 is viewed in a vertical direction (e.g., the Z-axis direction with reference to FIG. 7C), a separation space may be located between the frame 620 and the electrical object 4101 of the display module 410. In an embodiment, when the electrical object 4101 of the display module 410 is viewed in a vertical direction (e.g., the Z-axis direction with reference to FIG. 7C), the protrusion portion 622 of the frame 620 may extend toward the inner wall portion 421 up to the farthest position before the protrusion portion overlaps the electrical object 4101 of the display module 410. In addition, in an embodiment, when the electrical object 4101 of the display module 410 is viewed in a vertical direction, the protrusion portion 622 may be disposed closer to the rear surface of the electronic device 300 than the front surface of the electronic device. Therefore, the protrusion portion 622 of the frame 620 is disposed closer to the rear surface of the electronic device 300 than the front surface of the electronic device and is spaced apart from the electrical object 4101, and thus a coupling phenomenon occurring between the electrical object 4101 and the frame 620 may be alleviated. Therefore, the transmission or reception efficiency of a communication signal through the frame 620 may be improved.

In some embodiments, when the electrical object 4101 of the display module 410 is viewed in a vertical direction (e.g., the Z-axis direction with reference to FIG. 7C), the protrusion portion 622 of the frame 620 may extend toward the inner wall portion 421 up to a position where the protrusion portion does not overlap the electrical object 4101 of the display module 410. The frame 620 and the electrical object 4101 of the display module 410 do not overlap or partially overlap, so that a coupling phenomenon occurring between the electrical object 4101 and the frame 620 may be alleviated. Therefore, the transmission or reception efficiency of a communication signal through the frame 620 may be improved.

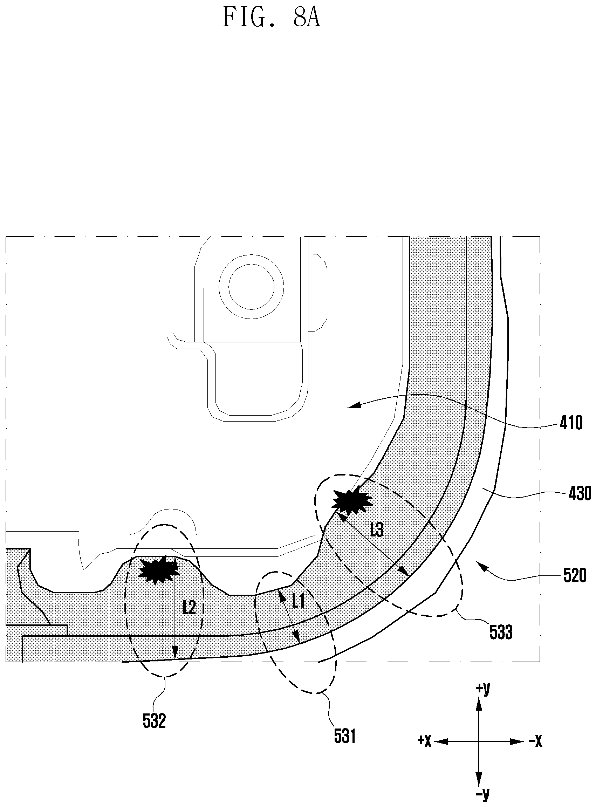

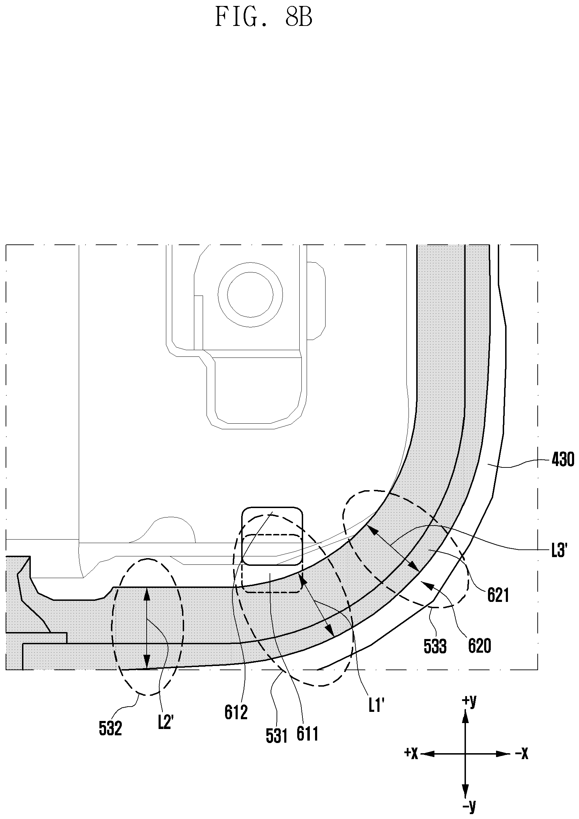

FIG. 8A illustrates the thickness of the frame of FIG. 6 according to an embodiment of the disclosure. FIG. 8B illustrates the thickness of the frame of FIG. 7A according to an embodiment of the disclosure.

According to an embodiment, FIG. 8A illustrates the frame 520 (e.g., the frame 520 of FIG. 6) of an embodiment that is different from the structure of the disclosure. FIG. 8B illustrates the frame 620 of an embodiment of the disclosure. Hereinafter, the antenna efficiency improvement through the frame 620 and the durability improvement of the frame 620 according to the disclosure will be described via the structural difference between FIGS. 8A and 8B.

According to an embodiment, FIG. 8A illustrates the frame 520 having the same structure as that in FIG. 6. As described above, the conduit portion 610 may be disposed adjacent to the frame 520 of FIG. 8A positioned on a lateral surface (e.g., the lateral surface 210C of the housing 210) of the housing 420. Accordingly, the thickness L1 of the first area 531 of the frame 520 adjacent to the conduit portion 610 may be formed to be thin as the conduit portion 610 is formed adjacent to the frame 520. To compensate for the thinning of the thickness of the first area 531 of the frame 520, the thickness L2 of the second area 532 and the thickness L3 of the third area 533, the areas being peripheral areas of the first area 531 of the frame 520, may be formed to be thicker than the thickness L1 of the first area. In this case, when the display module 410 (e.g., the display module 160 of FIG. 1, the display 201 of FIG. 2A, or the display 330 of FIG. 3) is viewed in a vertical direction (e.g., the Z-axis direction with reference to FIG. 5A), an area where the electrical object 4101 of the display module 410 overlap the second area 532 and the third area 533 of the frame 520 may be increased. Accordingly, a coupling phenomenon may occur between the frame 520 and the electrical object 4101 of the display module 410, and thus the transmission or reception efficiency of a communication signal through the frame 520 may be reduced.

On the other hand, according to an embodiment of the disclosure, the frame 620 shown in FIG. 8B may include the protrusion portion 622 extending toward the conduit portion 610 from one area of the body portion 621 positioned in the first area 531 adjacent to the conduit portion 610. In relation to the first area 531 of the frame 620, the protrusion portion 622 is formed, so that a thickness L1' of the first area 531 may be increased. The durability of the frame 620 may be improved through the protrusion portion 622. Accordingly, in FIG. 8A, the thickness L2 of the second area 532 and the thickness L3 of the third area 533 of the frame 520 overlapping the electrical object 4101 of the display module 410 may be reduced. For example, a thickness L2' of the second area 532 of the frame 620 shown in FIG. 8B may be formed to be thinner than the thickness L2 of the second area 532 of the frame 520 shown in FIG. 8A. In addition, a thickness L3' of the third area 533 of the frame 620 shown in FIG. 8B may be formed to be thinner than the thickness L3 of the third area 533 of the frame 520 shown in FIG. 8A. Therefore, in relation to the frame 620 of FIG. 8B, when the display module 410 is viewed in a vertical direction, the second area 532 and the third area 533 may not overlap the electrical object 4101 of the display module 410 or the overlapping area may be reduced. Accordingly, a coupling phenomenon which may occur between the frame 620 and the electrical object 4101 of the display module 410 may be reduced, so that the transmission or reception efficiency of a communication signal through the frame 620 may be improved.

In addition, according to an embodiment of the disclosure, the protrusion portion 622 of the frame 620 shown in FIG. 8B may be closer to a rear surface (e.g., the rear surface 210B of the housing 210 of FIG. 2B) than a front surface (e.g., the front surface 210A of the housing 210 of FIG. 2A) of the housing 420. In this case, the distance between the frame 620 and the electrical object 4101 of the display module 410 caused by a coupling phenomenon may be relatively greater than when the protrusion portion is disposed adjacent to the front surface of the housing 420. Accordingly, a coupling phenomenon which may occur between the frame 620 and the electrical object 4101 of the display module 410 may be alleviated or reduced.

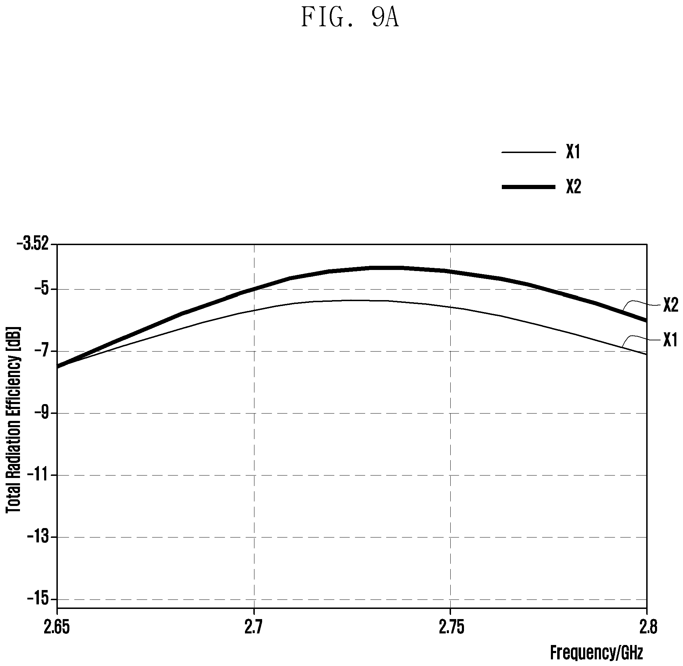

FIGS. 9A to 9C illustrate a change in antenna performance according to an embodiment of the disclosure.

According to an embodiment, FIG. 9A is a graph comparing an antenna gain of the frame 520 shown in FIG. 8A with an antenna gain of the frame 620 shown in FIG. 8B. In addition, the graph of FIG. 9A illustrates an improved antenna gain according to the reduction of an area (e.g., the second area 532 and the third area 533 of the frame 620) of the frame 620 shown in FIG. 8B overlapping the display module 410 (e.g., the display module 160 of FIG. 1, the display 201 of FIG. 2A, or the display 330 of FIG. 3) and the formation of the protrusion portion 622. Referring to FIG. 9A, it may be identified that an antenna gain X2 of the frame 620 shown in FIG. 8B is improved compared to an antenna gain X1 of the frame 520 shown in FIG. 8A. For example, the antenna gain X2 of the frame 620 shown in FIG. 8B may be improved by 1.5 db compared to the antenna gain X1 of the frame 520 shown in FIG. 8A. The transmission or reception efficiency of a communication signal of the frame 620 of the disclosure may be improved through the reduction of an area (e.g., the second area 532 of the frame 620 and the third area 533 of the frame 620) where the frame overlaps the electrical object 4101 of the display module 410 and by the protrusion portion 622 formed at a position relatively spaced apart from the electrical object 4101 of the display module 410.

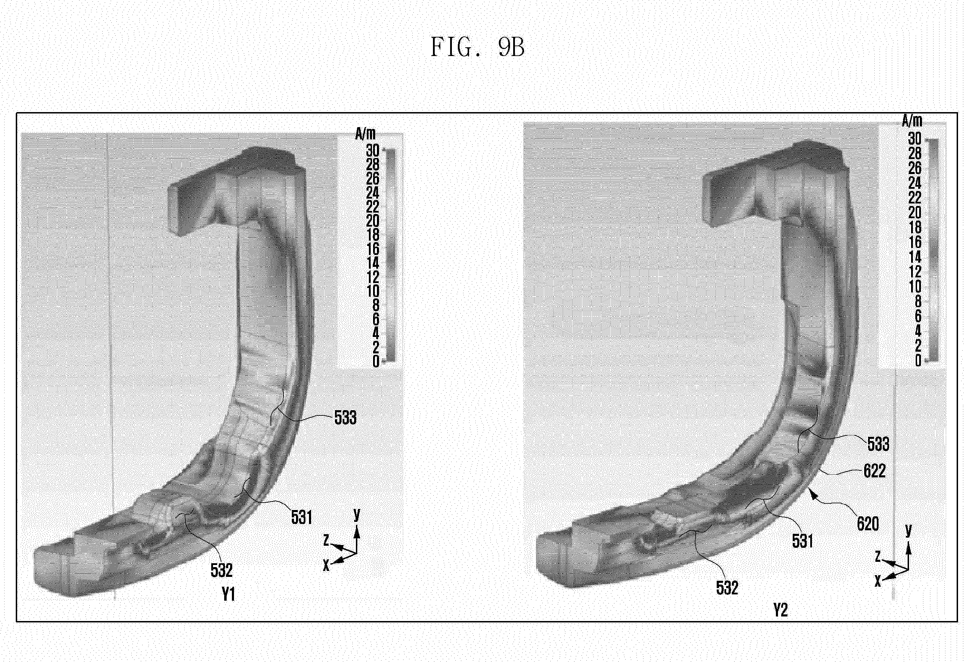

According to an embodiment, FIG. 9B illustrates a magnetic field distribution of the frame 520 of FIG. 8A and the frame 620 of FIG. 8B. Referring to FIG. 9B, in comparison of a picture Y1 illustrating a magnetic field distribution of the frame 520 shown in FIG. 8A and a picture Y2 illustrating a magnetic field distribution of the frame 620 shown in FIG. 8B, it may be seen that a magnetic field distribution is formed to be high in the protrusion portion 622 of the frame 620 of FIG. 8B. Therefore, it may be identified that a communication signal is smoothly transmitted or received in the protrusion portion 622. In an embodiment of the disclosure, the protrusion portion 622 of the frame 620 is closer to a rear surface (e.g., the rear surface 210B of the housing 210 of FIG. 2B) than a front surface (e.g., the front surface 210A of the housing 210 of FIG. 2A) of the housing 420 (e.g., the housing 210 of FIGS. 2A and 2B), and extends up to a position where the protrusion portion does not overlap the electrical object 4101 of the display module 410, so that the antenna performance of frame 620 may be improved.

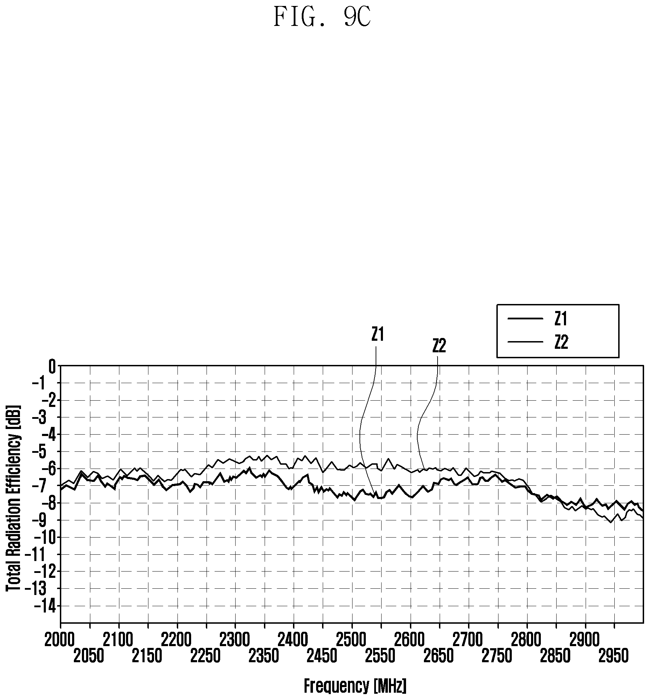

According to an embodiment, FIG. 9C is a graph illustrating antenna gain improvement according to the reduction of the overlapping area between the frame 620 and the electrical object 4101 of the display module 410 by the reduction of the thickness L2' of the second area 532 and the thickness L3' of the third area 533 of the frame 620 of FIG. 8B. Referring to FIG. 9C, it may be identified that an antenna gain Z2 in a state where the thicknesses of the second area 532 and the third area 533 in the frame 620 of FIG. 8B are reduced and thus the overlapping area between the frame 620 and the electrical object 4101 of the display module 410 is reduced is improved more than an antenna gain Z1 in a case where the second area 532 and the third area 533 of the frame 520 of FIG. 8A overlap the electrical object 4101 of the display module 410. In an embodiment of the disclosure, in relation to the frame 620, when the display module 410 is viewed in a vertical direction, the second area 532 and the third area 533 of the frame 620 may not overlap the electrical object 4101 of the display module 410 or the overlapping area may be reduced. Accordingly, a coupling phenomenon which may occur between the frame 620 and the electrical object 4101 of the display module 410 may be reduced, so that the transmission or reception efficiency of a communication signal through the frame 620 may be improved as shown in FIG. 9B.

In the above description, it has been described on the premise that the electronic device 300 according to an embodiment of the disclosure is a bar type electronic device. However, this may not limit the shape of the electronic device 300. The electronic device 300 according to an embodiment of the disclosure may be a foldable electronic device in which two housings are folded to face each other, a slidable electronic device in which two housings slide with respect to each other, or a stretchable electronic device.

An electronic device 300 (e.g., the electronic device 101 of FIG. 1 or the electronic device 200 of FIG. 2A or 2B) according to an embodiment of the disclosure may include a housing 210 including a front surface (e.g., the front surface 210A of FIG. 2A) on which a display module 410 (e.g., the display module 160 of FIG. 1, the display 201 of FIG. 2A, or the display 330 of FIG. 3) is disposed, a rear surface (e.g., the rear surface 210B of FIG. 2B) opposite to the front surface, and a lateral surface (e.g., the lateral surface 210C of FIG. 2A) surrounding a space between the front surface and the rear surface, a waterproof structure WP disposed between the housing and the display module and including a first waterproof member 451 disposed along one lateral surface of the housing, a second waterproof member 452 disposed along the remaining lateral surface of the housing, and a third waterproof member 453 configured to connect the first waterproof member and the second waterproof member, a conduit portion 610 which is disposed to extend from the front surface of the housing to the rear surface of the housing so as to be inclined with respect to a direction (e.g., the Z-axis direction with reference to FIG. 7B) perpendicular to the display module, and into which the third waterproof member is introduced, and a frame 620 which is made of a conductive material and disposed to surround the lateral surface of the housing, and includes a protrusion portion 622 extending toward the conduit portion.

In addition, the display module may include a display panel 413 and a bending portion 510 which includes multiple wires electrically connected to the display panel and on which a display driver IC (DDI) 511 configured to control the display panel is disposed, and the bending portion may be positioned inside the waterproof structure.

In addition, the conduit portion may include a first hole 611 disposed on the front surface of the housing, and a second hole 612 disposed on the rear surface of the housing and spaced apart from the first hole in a first direction (e.g., the +Y direction with reference to FIG. 7B).

In addition, the protrusion portion may be positioned closer to the rear surface of the housing than the front surface of the housing.

In addition, at least a part of the protrusion portion of the frame may be positioned in the conduit portion.

In addition, when the display module is viewed in a vertical direction, the frame and the protrusion portion may not overlap an electrical object 4101 configuring the display module.

In addition, the electronic device may further include a lateral member 430 (e.g., the lateral bezel structure 218 of FIG. 2A or the lateral member 310 of FIG. 3) made of a non-metallic material and surrounding the lateral surface of the housing, and the frame may be positioned inside the lateral member.

In addition, the lateral member may include an inner wall portion 421 protruding toward the conduit portion from one surface of the lateral member, and at least a part of the protrusion portion of the frame may be positioned in the inner wall portion.

In addition, the inner wall portion of the lateral member may be positioned closer to the rear surface of the housing than the front surface of the housing.

In addition, the frame may be made of a metal material and electrically connected to a communication module 190 to transmit or receive a communication signal.

In addition, at least a part of the frame may be exposed to the outside of the electronic device.

An antenna structure disposed to surround a lateral surface of a housing (e.g., the housing 210 of FIGS. 2A and 2B) of an electronic device 300 (e.g., the electronic device 101 of FIG. 1 or the electronic device 200 of FIG. 2A or 2B) according to an embodiment of the disclosure may include a communication module 190, a waterproof structure WP which is disposed between the housing and a display module 410 (e.g., the display module 160 of FIG. 1, the display 201 of FIG. 2A, or the display 330 of FIG. 3) disposed on a front surface (e.g., the front surface 210A of FIG. 2A) of the housing, and includes a first waterproof member 451 disposed along one lateral surface of the housing, a second waterproof member 452 disposed along the remaining lateral surface of the housing, and a third waterproof member 453 configured to connect the first waterproof member and the second waterproof member, a conduit portion 610 which is disposed to extend from the front surface of the housing to a rear surface (e.g., the rear surface 210B of FIG. 2B) of the housing so as to be inclined with respect to a direction (e.g., the Z-axis direction with reference to FIG. 7B) perpendicular to the display module, and into which the third waterproof member is introduced, and a frame 620 which is made of a conductive material, disposed to surround the lateral surface (e.g., the lateral surface 210C of FIG. 2c) of the housing, and electrically connected to the communication module, and includes a protrusion portion 622 extending toward the conduit portion.

In addition, the display module may include a display panel 413 and a bending portion 510 which includes multiple wires electrically connected to the display panel and on which a display driver IC (DDI) 511 configured to control the display panel is disposed, and the bending portion may be positioned inside the waterproof structure.

In addition, the conduit portion may include a first hole 611 disposed on the front surface of the housing, and a second hole 612 disposed on the rear surface of the housing and spaced apart from the first hole in a first direction (e.g., the +Y direction with reference to FIG. 7B).

In addition, the protrusion portion may be positioned closer to the rear surface of the housing than the front surface of the housing.

In addition, at least a part of the protrusion portion of the frame may be positioned in the conduit portion.

In addition, when the display module is viewed in a vertical direction, the frame and the protrusion portion may not overlap an electrical object 4101 configuring the display module.

In addition, the antenna structure may further include a lateral member 430 made of a non-metallic material and surrounding the lateral surface of the housing, and the frame may be positioned inside the lateral member.

In addition, the lateral member may include an inner wall portion 421 protruding toward the conduit portion from one surface of the lateral member, and at least a part of the protrusion portion of the frame may be positioned in the inner wall portion.

In addition, the inner wall portion of the lateral member may be positioned closer to the rear surface of the housing than the front surface of the housing.

According to an embodiment of the disclosure, an antenna deterioration phenomenon due to coupling between the frame and the display module may be reduced by removing a part of an area (e.g., the second area 532 or the third area 533) of the frame 620 overlapping the electrical object 4101 of the display module 410. In addition, the frame may extend toward the inside of the electronic device from an area located relatively far from the display module up to an area which does not overlap the display module. Accordingly, the rigidity of the frame may be improved.

## Claims

1. An electronic device (200, 300) comprising:
a display module (160, 201, 330, 410);
a housing (420) comprising a front surface (210A) on which the display module (160, 201, 330, 410) is disposed, a rear surface (210B) opposite to the front surface (210A), and a lateral surface (210C) surrounding a space between the front surface (210A) and the rear surface (210B);
a waterproof structure (WP) disposed between the housing (420) and the display module (160, 201, 330, 410) and comprising a first waterproof member (451) disposed along one lateral surface (210C) of the housing (420), a second waterproof member (452) disposed along a remaining lateral surface (210C) of the housing (420), and a third waterproof member (453) configured to connect the first waterproof member (451) and the second waterproof member (452);
a conduit portion (610) which is disposed to extend from the front surface (210A) of the housing (420) to the rear surface (210B) of the housing (420) so as to be inclined with respect to a direction (z) perpendicular to the display module (160, 201, 330, 410), and into which the third waterproof member (453) is introduced; and
a frame (520, 620) which is made of a conductive material and disposed to surround the lateral surface (210C) of the housing (420), and comprises a protrusion portion (622) extending toward the conduit portion (610).

2. The electronic device (200, 300) of claim 1, wherein the display module (160, 201, 330, 410) comprises a display panel (413) and a bending portion (510) which comprises multiple wires electrically connected to the display panel (413) and on which a display driver IC, DDI, (511) configured to control the display panel (413) is disposed, and
wherein the bending portion (510) is positioned inside the waterproof structure.

3. The electronic device (200, 300) of any one of claims 1 to 2, wherein the conduit portion (610) comprises a first hole (611) disposed on the front surface (210A) of the housing (420), and a second hole (612) disposed on the rear surface (210B) of the housing (420) and spaced apart from the first hole (611) in a first direction.

4. The electronic device (200, 300) of any one of claims 1 to 3, wherein the protrusion portion (622) is positioned closer to the rear surface (210B) of the housing (420) than the front surface (210A) of the housing (420).

5. The electronic device (200, 300) of any one of claims 1 to 4, wherein at least a part of the protrusion portion (622) of the frame (520, 620) is positioned in the conduit portion (610).

6. The electronic device (200, 300) any one of claims 1 to 5, further comprising an electrical object (4101) adapted for configuring the display module (160, 201, 330, 410), wherein a projection of the frame (520, 620) and a projection of the protrusion portion (622) along an axis (z) which extends in a direction perpendicular to the display module (160, 201, 330, 410) do not overlap with the electrical object (4101) .

7. The electronic device (200, 300) of any one of claims 1 to 6, further comprising a lateral member (430) made of a non-metallic material and surrounding the lateral surface (210C) of the housing (420),
wherein the frame (520, 620) is disposed inside the lateral member (430).

8. The electronic device (200, 300) of claim 7, wherein the lateral member (430) comprises an inner wall portion (421) protruding toward the conduit portion from one surface of the lateral member (430), and
wherein at least a part of the protrusion portion (622) of the frame (520, 620) is disposed in the inner wall portion (421).

9. The electronic device (200, 300) of claim 8, wherein the inner wall portion (421) of the lateral member (430) is positioned closer to the rear surface (210B) of the housing (420) than the front surface (210A) of the housing (420).

10. The electronic device (200, 300) of any one of claims 1 to 9, wherein the frame (520, 620) is made of a metal material

11. The electronic device (200, 300) of any one of claims 1 to 10, wherein at least a part of the frame (520, 620) is exposed to an outside of the electronic device (200, 300).

12. An antenna structure disposed to surround a lateral surface(210C) of a housing (420) of an electronic device (200, 300), the antenna structure comprising:
a communication module (190);
a waterproof structure(WP) which is disposed between the housing(420) and a display module(160, 201, 330, 410) disposed on a front surface(210A) of the housing(420), and comprises a first waterproof member(451) disposed along one lateral surface(210C) of the housing(420), a second waterproof member(452) disposed along a remaining lateral surface(210C) of the housing(420), and a third waterproof member(453) configured to connect the first waterproof member(451) and the second waterproof member(452);
a conduit portion (610) which is disposed to extend from the front surface(210A) of the housing(420) to a rear surface(210B) of the housing(420) so as to be inclined with respect to a direction(z) perpendicular to the display module(160, 201, 330, 410), and into which the third waterproof member(453) is introduced; and
a frame (520, 620) which is made of a conductive material, disposed to surround the lateral surface (210c) of the housing (420), and electrically connected to the communication module (190), and comprises a protrusion portion extending toward the conduit portion.

13. The antenna structure of claim 12, wherein the conduit portion (610) comprises a first hole (611) disposed on the front surface (210A) of the housing (420), and a second hole (612) disposed on the rear surface (210B) of the housing (420) and spaced apart from the first hole (611) in a first direction.

14. The antenna structure of claims 12 or 13, wherein the protrusion portion (622) is positioned closer to the rear surface (210B) of the housing (420) than the front surface (210A) of the housing (420), and is positioned in the conduit portion.

15. The antenna structure of any one of claims 12 to 14, further comprising an electrical object (4101) adapted for configuring the display module (160, 201, 330, 410),
wherein a projection of the frame (520, 620) and a projection of the protrusion portion (622) along an axis (z) which extends in a direction perpendicular to the display module (160, 201, 330, 410) do not overlap with the electrical object (4101).
